# FASCICULE DE BREVET EUROPEEN

(11) **EP 2 117 671 B1**
(45) Date de publication et mention de la délivrance du brevet: **27.03.2013**
(21) Numéro de dépôt: 06819773.0
(22) Date de dépôt: 27.11.2006
(51) Int. Cl.: B01D 46/24, F04C 29/02

(54) **DISPOSITIF DE MONTAGE DE FILTRES**
FILTERINSTALLATIONSVORRICHTUNG
FILTER INSTALLATION DEVICE

(43) Date de publication de la demande: 18.11.2009
(73) Titulaire: Ateliers Busch S.A., 2906 Chevenez (CH)
(72) Inventeur: BILGER, Théo, 68510 Helfrantzkirch (FR)
(74) Mandataire: Scheuzger, Beat Otto
(86) Numéro de dépôt international: PCT/EP2006/068944
(87) Numéro de publication internationale: WO 2008/064713

(56) Documents cités:
- EP-A1- 1 222 951
- DE-A1- 3 445 400
- GB-A- 2 252 514
- US-A1- 2004 184 941
- US-B1- 6 350 299

## Description

L'invention se rapporte à un dispositif d'extraction de gouttelettes d'un agent liquide qui sont en suspension dans un fluide gazeux déglacé dans une machine de déplacement d'un tel fluide gazeux.

L'invention se rapporte également à une machine équipée du dispositif d'extraction précité.

L'invention s'applique plus particulièrement, mais non exclusivement à un dispositif d'extraction pour une pompe à vide qui met en oeuvre un rotor équipé de palettes.

D'une manière générale, une machine de déplacement de fluide gazeux comprend classiquement un appareil de déplacement de fluide gazeux mettant en oeuvre au moins une pièce mobile dont le fonctionnement requiert l'utilisation d'un agent liquide, tel un agent liquide qui, ayant pour fonctions d'assurer la lubrification et l'étanchéité de la pièce mobile, se retrouve sous forme de gouttelettes en suspension dans le fluide gazeux expulsé de l'appareil.

Lors de son expulsion de l'appareil de déplacement, le fluide gazeux entraîne des gouttelettes d'agent liquide et le fluide gazeux expulsé ne peut être utilisé, ou rejeté à l'atmosphère, ou dans l'environnement de la pompe, sans traitement préalable en vue de l'extraction de l'agent liquide.

A cet effet, le fluide gazeux expulsé de l'appareil de déplacement est introduit dans un dispositif ayant une fonction d'extraction des gouttelettes d'agent liquide qui sont en suspension dans le fluide gazeux.

DE 34 45 400 A1 divulgue un séparateur d'huile dans lequel la cartouche de séparateur peut être facilement enlevée.

Malgré de longues décennies d'études et de développements des pompes à vide à palettes, les spécialistes recherchent encore de nos jours des solutions permettant de réaliser de telles pompes qui, bien que présentant un encombrement réduit par rapport aux pompes connues, ont des performances et une fiabilité qui sont accrues, mais un coût de fabrication qui est cependant réduit.

Ce compromis est très difficile à obtenir et lorsqu'il peut être obtenu, ce n'est que par l'utilisation de dispositifs d'extraction d'un type conçu pour une pompe que le bon fonctionnement de l'ensemble et le respect de normes, telles des normes de pollution, peuvent être garantis.

Certaines parties des dispositifs d'extraction ont une durée de vie très limitée par rapport à la durée de vie de la pompe et ces parties des dispositifs d'extraction doivent être périodiquement remplacées par ces neuves.

Le remplacement doit être simple et rapide mais, l'utilisateur de la pompe ou la personne qui en assure l'entretien, la maintenance, ne doit pas avoir la possibilité de commettre l'erreur d'utiliser une partie neuve de dispositif d'extraction qui n'est pas appropriée, c'est-à-dire qui est non dédiée, à une autre partie du dispositif d'extraction.

Un résultat que l'invention vise à obtenir est justement un dispositif d'extraction qui ne permet pas ce type d'erreur.

A cet effet, l'invention a pour objet un dispositif d'extraction selon la revendication 1.

L'invention a également pour objet une machine équipée du dispositif d'extraction selon la revendication 1.

L'invention sera bien comprise à la lecture de la description ci-après faite à titre d'exemple non limitatif en regard du dessin ci-annexé qui représente schématiquement :

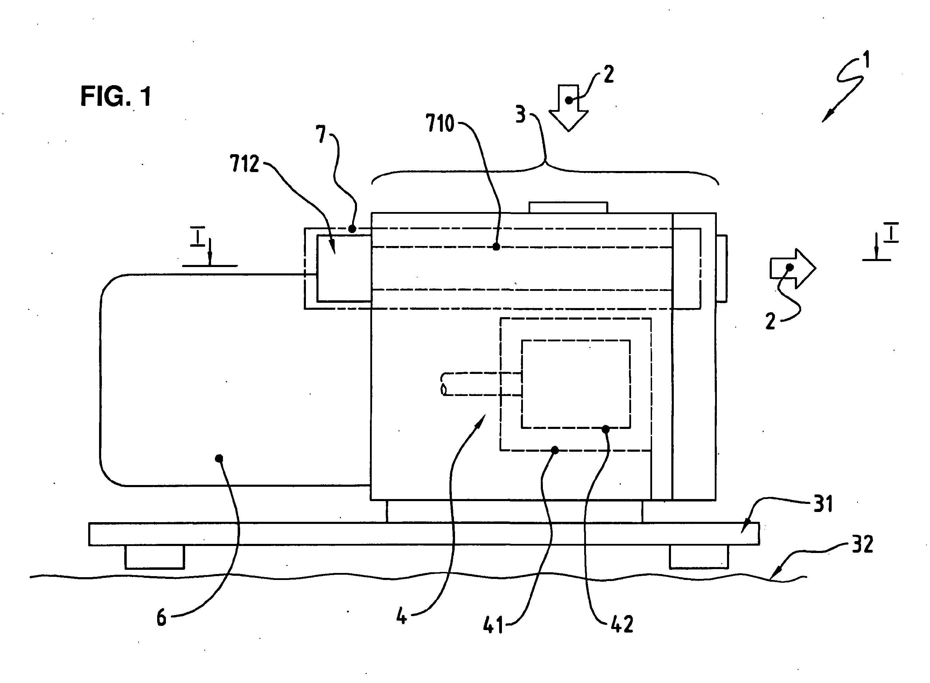

Figure 1 : une vue de profil d'une machine équipée du dispositif d'extraction selon l'invention,

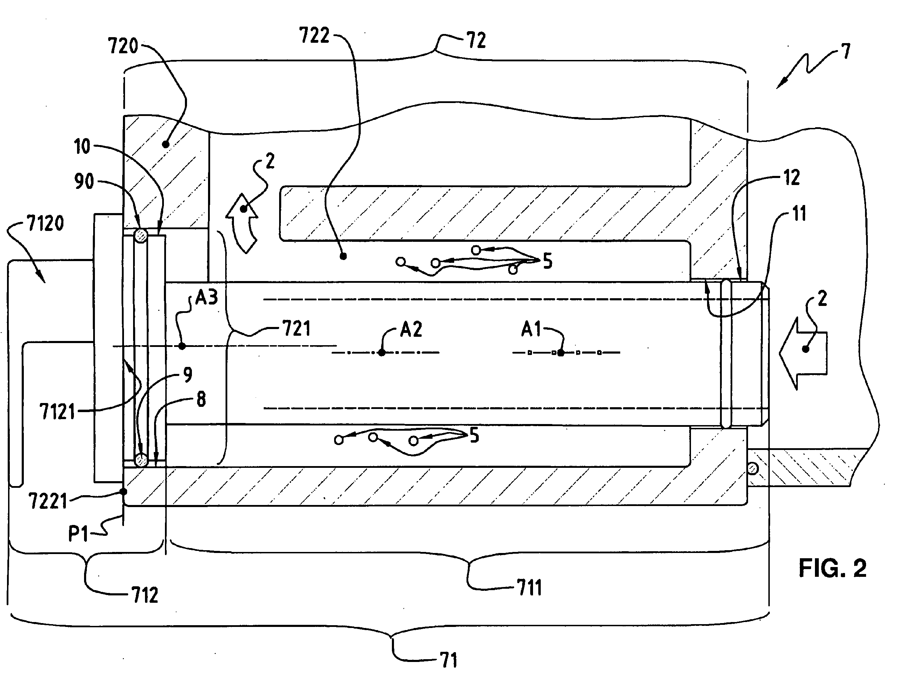

Figure 2 : une vue en coupe longitudinale d'un dispositif d'extraction selon l'invention suivant le plan I-I de la figure 1,

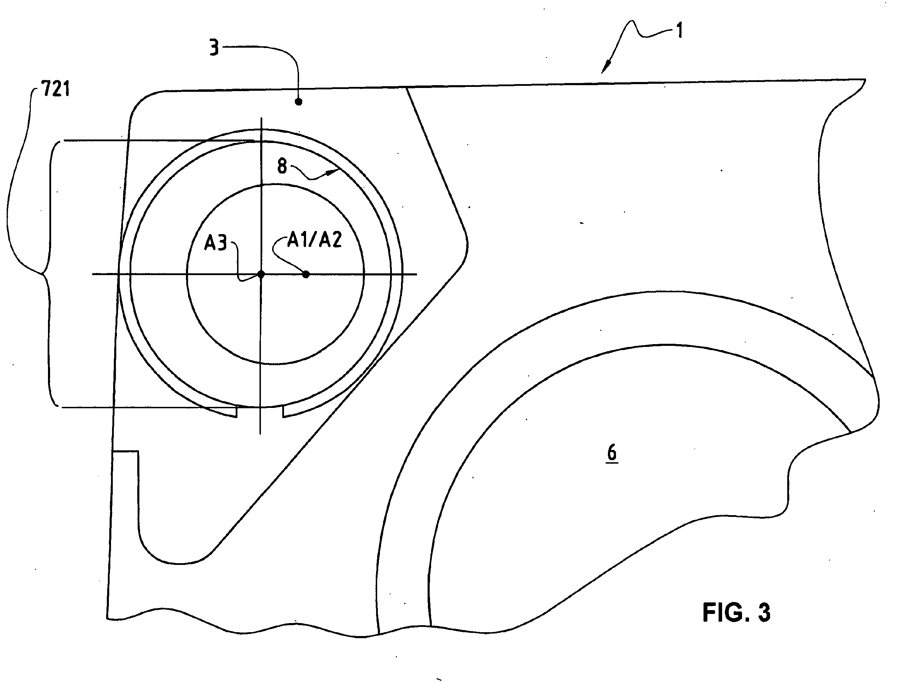

Figure 3 : une vue partielle selon F de la machine de la figure 1 ;

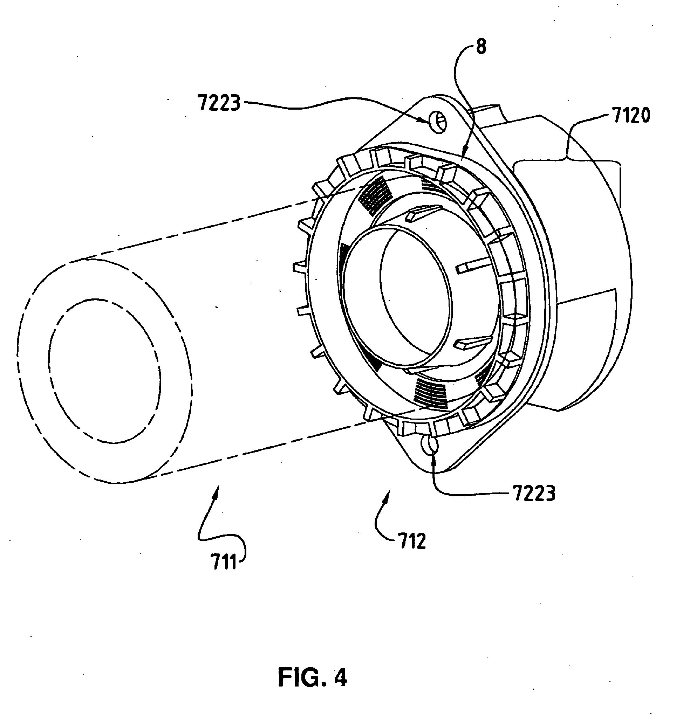

Figure 4 : une vue en perspective d'une partie du dispositif d'extraction.

En se reportant au dessin, on voit une machine 1 de déplacement de fluide gazeux 2.

La machine 1 comprend une structure 3 qui, avantageusement, est équipée d'un piétement d'appui 31 sur un support 32, par exemple, horizontal.

Le fluide gazeux 2 a été symbolisé par plusieurs flèches repérées 2.

La machine 1 est placée dans un circuit de fluide gazeux 2 qui n'a pas été représenté.

La machine 1 prélève le fluide gazeux dans une portion du circuit et l'expulse dans une autre.

La machine de déplacement de fluide gazeux 2 comprend classiquement un appareil 4 de déplacement de fluide gazeux mettant en oeuvre au moins une pièce mobile 42 dont le fonctionnement requiert l'utilisation d'un agent liquide 5, tel un agent liquide 5 qui, ayant pour fonctions d'assurer la lubrification et l'étanchéité de la pièce mobile 42, se retrouve sous forme de gouttelettes en suspension dans le fluide gazeux 2 expulsé de l'appareil 4.

L'appareil 4 comprend, par exemple, un cylindre 40 avec un alésage 41 qui abrite une pièce mobile 42 consistant en un rotor, lubrifié et étanchéifié avec un agent liquide 5 et relié à un moteur 6.

Lors de son expulsion de l'appareil 4 de déplacement, le fluide gazeux 2 entraîne des gouttelettes d'agent liquide 5 et le fluide gazeux 2 expulsé ne peut être utilisé, ou rejeté à l'atmosphère, ou dans l'environnement de la machine 1, sans traitement préalable en vue de l'extraction d'agent liquide 5.

Les valeurs de rejets sont notamment imposées par des lois en regard de normes.

A cet effet, le fluide gazeux 2 expulsé de l'appareil 4 de déplacement est introduit dans au moins un dispositif 7 dit d'extraction et ayant une fonction d'extraction des gouttelettes d'agent liquide 5 qui sont en suspension dans le fluide gazeux 2.

L'agent liquide 5 a été représenté par des cercles repérés 5.

Ces cercles symbolisent des goulettes (non représentées) réunies en gouttes qui vont couler vers un réservoir de récupération (non représenté).

Le dispositif 7 d'extraction comprend essentiellement une première partie 71 et une seconde partie 72,
- la première partie 71 étant constituée,
   . d'un premier élément 711 qui, de forme allongée, avec un axe longitudinal, dit premier axe A1, est destiné à assurer à l'intérieur de l'appareil 4 une fonction de filtration, et
   . d'un second élément 712 qui est destiné à autoriser au moins l'une des fonctions que sont une fonction de préhension au moins manuelle de la première partie 71 et une fonction de fixation de cette première partie 71 sur la seconde partie 72,
- la seconde partie 72 étant constituée par une paroi 720, laquelle
   . détermine une chambre 722 qui, destinée à être traversée par le fluide gazeux 2 à filtrer, reçoit ledit premier élément 711 en une position dite position P1 de fonctionnement, et
   . comprend une ouverture 721 qui délimite un passage suffisant pour l'introduction du premier élément 711 dans la chambre 722.

L'expression « fonction de préhension » signifie que le second élément 712 peut être, par exemple manuellement, saisi et maintenu afin d'autoriser la manipulation du dispositif 7 d'extraction.

La première partie 71 et la seconde partie 72 présentent des portées d'appui réciproque pour, en position P1 de fonctionnement du premier élément 711, au moins assurer l'alignement du premier axe A1 du premier élément 711 avec un autre axe, dit second axe A2 défini par la seconde partie 72, et ce, afin de :
- garantir un cheminement du fluide gazeux 2 à travers le premier élément 711 lorsque ce premier élément 711 est maintenu dans la position P1 de fonctionnement,
- s'opposer à la fuite de fluide gazeux 2 vers l'extérieur du dispositif 7 d'extraction,
- autoriser l'une des opérations que sont, d'une part, l'engagement en translation du premier élément 711 dans la chambre 722 à travers l'ouverture 721 et selon ledit second axe A2, et ce, jusqu'à la position dite de fonctionnement P1 et, d'autre part, le dégagement en translation dudit premier élément 711 en vue de son extraction complète de la chambre 722.

Le premier élément 711 de la première partie 71 du dispositif 7 d'extraction a, par exemple, une forme cylindrique allongée sur laquelle on peut distinguer deux extrémités opposées, dont une première extrémité à laquelle le second élément 712 se trouve assemblé et une autre extrémité qui est libre.

Lors du montage, c'est l'extrémité libre du premier élément 711 qui est introduite par l'ouverture 721 et est poussée dans la chambre 722 de la deuxième partie 72 du dispositif 7 d'extraction.

De préférence, le dispositif 7 d'extraction comprend une troisième portée 11 et une quatrième portée 12 qui coopèrent pour au moins participer à la définition du second axe A2.

La troisième portée 11 est située à l'extrémité libre de la première partie 711 du premier élément 71 et la quatrième portée 12 est située, en vis à vis, dans la paroi 720.

Dans les dispositifs 7 d'extraction connus, toutes les portées (première à quatrième) sont cylindriques de révolution et les axes d'assemblage (second et troisième) à la définition desquels elles participent deux à deux, sont tous alignés, ce qui rend les premières parties 71 de ces dispositifs 7 d'extraction très facilement interchangeables, avec les risques d'utilisations non appropriées qui en résultent.

Afin d'éviter que des premières parties 71 non dédiées à un dispositif 7 d'extraction puisse être utilisées, de manière remarquable :
- l'ouverture 721 prévue pour laisser passage au premier élément 711 de la première partie 71 définit au moins l'une des portées d'appui et cette portée, dite première portée 8, est destinée à coopérer, par le biais d'un joint d'étanchéité 9, avec une autre portée d'appui, dite seconde portée 10 située sur le second élément 712 de la première partie 71 du dispositif 7 d'extraction,
- lesdites première portée 8 et seconde portée 10 ont des formes complémentaires, de manière à s'emboîter par translation selon un troisième axe A3 qui est sensiblement parallèle au second axe A2, lorsque la première partie 71 est amenée en position P1 de fonctionnement,
- as moins l'un des paramètres que sont,
   . d'une part, les formes complémentaires de la première portée 8 et de la seconde portée 10 et,
   . d'autre part, un écart de position du second axe A2 par rapport au troisième axe A3,
est tel que cela entrave la rotation de la seconde portée 10 dans la première portée 8.

Empêcher là rotation de la seconde portée 10 dans la première portée 8 n'est pas une finalité en tant que telle, mais le fait que la rotation soit entravée permet de garantir l'obtention du résultat recherché, à savoir, que la seconde partie du dispositif 7 d'extraction ne puisse recevoir qu'une première partie 71 qui lui est effectivement dédiée.

Le second axe A2 et le troisième axe A3 peuvent être confondus.

D'une autre manière, le second axe A2 et le troisième axe A3 peuvent être confondus et décalés par rapport au premier axe A1.

Egalement, le second axe A2 et le troisième axe A3 peuvent être confondus et sensiblement alignés sur le premier axe A1.

La position P1 de fonctionnement est, par exemple, définie par deux surfaces antagonistes qui, l'une, dite première surface 7121 et située sur la première partie 71, et l'autre, dite seconde surface 7221 et située sur la seconde partie 72, viennent en contact lorsque la translation de la première partie 71 du dispositif 7 d'extraction dans la chambre 722 doit être stoppée parce que la position P1 de fonctionnement est atteinte.

La première surface 7121 et la seconde surface 7221 sont avantageusement des surfaces qui s'étendent dans des plans sensiblement orthogonaux au second axe A2.

Si une première partie 71 non dédiée à une seconde partie 72 est utilisée, il se produit une fuite de fluide gazeux 2 et cela entrave le fonctionnement normal du dispositif 7 d'extraction et/ou de l'appareil 4 ou au moins le perturbe à un tel point qu'un opérateur doit remédier à cet inconvénient en utilisant une première partie 71 dédiée, s'il souhaite obtenir un fonctionnement correct.

Selon une première forme remarquable de réalisation :
- la première portée 8 et la seconde portée 10 ont chacune une forme sensiblement cylindrique de révolution dont les diamètres sont ajustés pour autoriser leur emboîtement par translation relative selon le troisième axe A3, et
- le troisième axe A3 est écarté du second axe A2 d'une valeur prédéterminée, pour entraver la rotation relative des première portée 8 et seconde portée 10 selon le troisième axe A3.

Il n'est pas possible d'indiquer exactement une valeur précise ou un intervalle de valeur pour la valeur de décalage, car cela dépend notamment du jeu de montage qui existe entre la première portée 8 et la seconde portée 10.

C'est l'homme de l'art qui choisit cette valeur suffisamment grande pour interdire le montage d'une première partie 71 et d'une seconde partie 72 qui ne sont pas dédiées.

Par forme cylindrique on désigne une forme définie par une pluralité de génératrices qui s'étendent parallèlement à un axe longitudinal.

Lorsque la forme cylindrique est de révolution, les génératrices sont parallèles et équidistantes de l'axe longitudinal.

Suivant une seconde forme de réalisation :
- la première portée 8 et la seconde portée 10 ont chacune une forme cylindrique qui est voisine d'une forme cylindrique de révolution, mais qui n'est pas cylindrique de révolution, et ces deux portées ont des dimensions qui sont ajustées pour autoriser leur emboîtement par translation relative selon le troisième axe A3,
- la forme cylindrique présente une asymétrie au moins suffisante pour entraver la rotation relative desdites première portée 8 et seconde portée 10 selon le troisième axe A3.

Par l'expression « voisine d'une forme cylindrique de révolution, mais qui n'est pas cylindrique de révolution » il faut comprendre, par exemple :
- une forme cylindrique qui, observée en section transversale, apparaît inscrite dans de deux arcs demi circulaires qui, de diamètres sensiblement différents, se raccordent sans angle notable et, par exemple, par des lignes courbes,
- une forme cylindrique qui, observée en section transversale, apparaît inscrite dans de deux arcs dont un demi circulaire et un autre ellipsoïde, qui se raccordent sans angle notable et, par exemple, par des lignes courbes.

Conformément à une troisième forme de réalisation :
- la première portée 8 et la seconde portée 10 ont chacune une forme cylindrique qui est voisine d'une forme cylindrique de révolution, mais qui n'est pas cylindrique de révolution, et ces deux portées ont des dimensions qui sont ajustées pour autoriser leur emboîtement par translation relative selon le troisième axe A3,
- la forme cylindrique présente une asymétrie au moins suffisante pour entraver la rotation relative desdites première portée 8 et seconde portée 10,
- le troisième axe A3 est séparé du second axe A2 d'une valeur prédéterminée, également pour entraver la rotation relative desdites première portée 8 et seconde portée 10 selon le troisième axe A3.

Les caractéristiques techniques des trois formes de réalisation qui viennent d'être annoncées permettent aussi de perturber une démarche volontaire de copie des premières parties 71 de dispositifs 7 d'extraction en ce sens qu'elles ont l'apparence :
- de comporter une seconde portée 10 cylindrique de révolution sans que cette dernière le soit, et/ou
- de comporter une seconde portée 10 parfaitement alignée avec l'axe longitudinal du premier élément 711 sans que cette dernière le soit.

Cela peut conduire les contrefacteurs à faire des erreurs.

Le joint d'étanchéité 9 est logé dans une gorge réalisée périphériquement dans la seconde portée 10 située sur le second élément 712 de la première partie 71.

L'homme du métier est à même de déterminer les dimensions desdites première portée 8 et seconde portée 10 afin de garantir la fonction d'étanchéité du joint annulaire 9.

Ces dimensions sont fonctions des caractéristiques et dimensions du joint annulaire 9, lesquelles sont généralement indiquées par le fabriquant de tout joint d'étanchéité de type annulaire.

Le fonctionnement de l'invention est possible car les joints d'étanchéité de type annulaire, tels les joints toriques, permettent de réaliser une interface élastique entre deux surfaces qui ne sont pas parfaitement circulaires de révolution.

Les particularités techniques de l'une quelconque des formes de réalisation rendent impossible l'utilisation d'une première partie 71 de dispositif 7 d'extraction qui ne répond pas à la définition précitée pour au moins l'une des raisons suivantes :
- ladite première partie 71 ne peut pas être amenée en position P1 de fonctionnement,
- ladite première partie 71 peut être amenée en position P1 de fonctionnement, mais aucune étanchéité ne peut être obtenue entre la première portée 8 et la seconde portée 10.

Tel que cela a été annoncé plus avant, le second élément 712 est destiné à autoriser depuis l'extérieur de l'appareil 1 une fonction de préhension au moins manuelle de l'ensemble constitué par lesdits premier élément 711 et second élément 712.

Pour permettre cette fonction de préhension et aussi une fonction de traction sur la première partie 71, le second élément 712 porte une poignée 7120.

En ce qui concerne la fonction de fixation, elle peut être assurée au moyen d'organes de fixation (non représentés) tels des vis qui traversent des perçages 7223 prévus dans la seconde partie 712 du premier élément 71 et trouvent ancrage dans la seconde partie 72.

De manière notable, la paroi 720 qui définit la chambre 722 destinée à loger le premier élément 711 de la première partie 71 est constituée par une paroi 720 de la structure 3 d'une machine 4 destinée à être équipée de ce dispositif 4 d'extraction.

De manière notable, la machine 1 de déplacement de fluide gazeux 2 comprend le dispositif 7 d'extraction qui vient d'être décrit.

## Revendications

1. Dispositif (7) d'extraction de gouttelettes d'un agent liquide (5) qui sont en suspension dans un fluide gazeux (2) déplacé dans une machine (1) de déplacement d'un tel fluide gazeux (2), le dispositif (7) d'extraction comprenant une première partie (71) et une seconde partie (72),
- la première partie (71) étant constituée,
. d'un premier élément (711) qui, de forme allongée, avec un axe longitudinal, dit premier axe (A1), est destiné à assurer une fonction de filtration, et
. d'un second élément (712) qui est destiné à autoriser au moins l'une des fonctions que sont une fonction de préhension au moins manuelle de la première partie (71) et une fonction de fixation de cette première partie (71) sur la seconde partie (72),
- la seconde partie (72) étant constituée par une paroi (720), laquelle
. détermine une chambre (722) qui, destinée à être traversée par le fluide gazeux (2) à filtrer, reçoit ledit premier élément (711) en une position dite position (P1) de fonctionnement, et
. comprend une ouverture (721) qui délimite un passage suffisant pour l'introduction du premier élément (711) dans la chambre (722),
la première partie (71) et la seconde partie (72) présentant des portées d'appui réciproque pour, en position (P1) de fonctionnement du premier élément (711), au moins, assurer l'alignement du premier axe (A1) de ce premier élément (711) avec un autre axe, dit second axe (A2) défini par la seconde partie (72), et ce, afin de garantir le bon fonctionnement du dispositif (7) d'extraction,
ce dispositif (7) étant **caractérisé en ce que**
- l'ouverture (721) prévue pour laisser passage au premier élément (711) de la première partie (71) définit au moins l'une des portées d'appui et cette portée, dite première portée (8), est destinée à coopérer, par le biais d'un joint d'étanchéité (9), avec une autre portée d'appui, dite seconde portée (10) située sur le second élément (712) de la première partie (71) du dispositif (7) d'extraction,
- les dites première portée (8) et seconde portée (10) ont des formes complémentaires, de manière à s'emboîter par translation selon un troisième axe (A3) qui est sensiblement parallèle au second axe (A2), lorsque la première partie (71) est amenée en position (P1) de fonctionnement, un écart de position du second axe (A2) par rapport au troisième axe (A3), est tel que cela entrave la rotation de la seconde portée (10) dans la première portée (8).

2. Dispositif selon la revendication 1, **caractérisé en ce que** :
- la première portée (8) et la seconde portée (10) ont chacune une forme sensiblement cylindrique de révolution dont les diamètres sont ajustés pour autoriser leur emboîtement par translation relative selon le troisième axe (A3), et
- le troisième axe (A3) est écarté du second axe (A2) d'une valeur prédéterminée, pour entraver la rotation relative desdites première portée (8) et seconde portée (10) selon le troisième axe (A3).

3. Dispositif selon la revendication 1, **caractérisé en ce que** :
- la première portée (8) et la seconde portée (10) ont chacune une forme cylindrique qui est voisine d'une forme cylindrique de révolution, mais qui n'est pas cylindrique de révolution, et ces deux portées ont des dimensions qui sont ajustées pour autoriser leur emboîtement par translation relative selon le troisième axe (A3),
- la forme cylindrique présente une asymétrie au moins suffisante pour entraver la rotation relative desdites première portée (8) et seconde portée (10) selon le troisième axe (A3).

4. Dispositif selon l'une des revendications 1 à 3, **caractérisé en ce que** la paroi (720) qui définit la chambre (722) destinée à loger le premier élément (711) de la première partie (71) est constituée par une paroi (720) de la structure (3) d'une machine (1) destinée à être équipée de ce dispositif (7) d'extraction.

5. Machine (1) de déplacement de fluide gazeux (2) comprenant un dispositif selon l'une quelconque des revendications 1 à 4.

## Claims

1. Device (7) for extracting droplets of a liquid agent (5) suspended in a gaseous fluid (2) displaced in a machine (1) for displacement of such a gaseous fluid (2), the extraction device (7) comprising a first part (71) and a second part (72),
- the first part (71) comprising
• a first element (711) which, of elongated shape, with a longitudinal axis termed the first axis (A1), is intended to ensure a filtration function, and
• a second element (712), which is intended to enable at least one of the functions which are a function of grasping at least by hand the first part (71) and a function of fixing this first part (71) to the second part (72),
- the second part (72) comprising a wall (720) that
• defines a chamber (722) which is intended to be traversed by the gaseous fluid (2) to be filtered, receives said first element (711) in a position termed the operational position (P1), and
• comprises an opening (721) that delimits a passageway sufficient for the insertion of the first element (711) into the chamber (722),
the first part (71) and the second part (72) having reciprocal supporting surfaces for at least ensuring, in operational position (P1) of the first element (711), the alignment of the first axis (A1) of this first element (711) with another axis, termed second axis (A2) defined by the second part (72), and this in order to guarantee good functioning of the extraction device (7),
this device (7) being **characterised in that**
- the aperture (721) provided to allow passage for the first element (711) of the first part (71) defines at least one of the supporting surfaces, and this supporting surface, termed first supporting surface (8), is intended to cooperate by way of a seal or gasket (9), with another supporting surface, termed second supporting surface (10) situated on the second element (712) of the first part (71) of the extraction device (7),
- said first supporting surface (8) and second supporting surface (10) have complementary shapes so as to fit together by translation along a third axis (A3) which is substantially parallel to the second axis (A2), when the first part (71) is brought into operational position (P1), a spacing apart of position of the second axis (A2) with respect to the third axis (A3) is such that this impedes the rotation of the second supporting surface (10) in the first supporting surface (8).

2. Device according to claim 1, **characterised in that**:
- the first supporting surface (8) and the second supporting surface (10) each have a substantially rotationally cylindrical shape, the diameters of which are adjusted to allow their fit through relative translation along the third axis (A3), and
- the third axis (A3) is spaced apart from the second axis (A2) by a predetermined value, to impede the relative rotation of said first supporting surface (8) and second supporting surface (10) along the third axis (A3).

3. Device according to claim 1, **characterised in that**:
- the first supporting surface (8) and the second supporting surface (10) each have a cylindrical shape which is akin to a rotationally cylindrical shape, but which is not rotationally cylindrical, and these two supporting surfaces have dimensions which are adjusted to allow their fit through relative translation along the third axis (A3),
- the cylindrical shape has an asymmetry at least sufficient to impede the relative rotation of said first supporting surface (8) and second supporting surface (10) along the third axis (A3).

4. Device according to one of the claims 1 to 3, **characterised in that** the wall (720) which defines the chamber (722) intended to accommodate the first element (711) of the first part (71) is made up of a wall (720) of the structure (3) of a machine (1) intended to be equipped with this extraction device (7).

5. Machine (1) for displacement of a gaseous fluid (2) comprising a device according to any one of the claims 1 to 4.

## Patentansprüche

1. Vorrichtung (7) zur Extraktion von Tröpfchen eines flüssigen Mittels (5), welche sich schwebend in einem gasförmigen Fluid (2) befinden, welches von einer Maschine (1) zur Verdrängung eines solchen gasförmigen Fluids (2) verdrängt wird, wobei die Vorrichtung (7) einen ersten Bauteil (71) und einen zweiten Bauteil (72) umfasst,
- das erste Bauteil (71) bestehend aus
. einem ersten länglichen Element (711) mit einer Längsachse, genannt erste Achse (A1), welches vorgesehen ist, um eine Filtrierungsfunktion zu gewährleisten, und
. einem zweiten Element (712), welches vorgesehen ist, um mindestens eine der folgenden Funktionen zu gewährleisten: eine Funktion des zumindest manuellen Greifens des ersten Bauteils (71) und eine Funktion der Befestigung dieses ersten Bauteils (71) am zweiten Bauteil (72),
- der zweite Bauteil (72) bestehend aus einer Wandung (720), welche
. eine Kammer (722) bestimmt, welche vorgesehen ist, um vom zu filtrierenden gasförmigen Fluid (2) durchströmt zu werden, und welche das erste Element (711) in einer Position, genannt Betriebsposition (P1), aufnimmt, und
. eine Öffnung (721) umfasst, welche einen zur Einführung des ersten Elements (711) in die Kammer (722) genügenden Durchlass bestimmt,
wobei das erste Bauteil (71) und das zweite Bauteil (72) gegenseitige Auflageflächen aufweisen, um in der Betriebsposition (P1) des ersten Elements (711) mindestens die Ausrichtung der ersten Achse (A1) dieses ersten Elements (711) mit einer anderen durch das zweite Bauteil (72) definierten Achse (A2), genannt zweite Achse, zu sichern, und dies, um eine gute Wirkungsweise der Extraktionsvorrichtung (7) zu garantieren,
wobei diese Vorrichtung (7) **dadurch gekennzeichnet ist, dass**
- die Öffnung (721), welche vorgesehen ist, um dem ersten Elementen (711) des ersten Bauteils (71) Durchlass zu ermöglichen, mindestens eine der Auflageflächen definiert, und diese Auflagefläche, genannt erste Auflagefläche (8), vorgesehen ist, um über einen Dichtungsring (9) mit einer am zweiten Element (712) des ersten Bauteils (71) der Extraktionsvorrichtung (7) liegenden zweiten Auflagefläche, genannt zweite Auflagefläche (10), zusammenzuwirken,
- die genannten erste Auflagefläche (8) und zweite Auflagefläche (10) komplementäre Formen haben, so dass sie durch Verschiebung entlang einer im Wesentlichen zur zweiten Achse (A2) parallelen dritten Achse (A3) ineinandergreifen, wenn das erste Bauteil (71) in die Betriebsposition (P1) gebracht wird, wobei der Abstand der Position der zweiten Achse (A2) im Bezug auf die dritte Achse (A3) derart ist, dass dies die Drehung der zweiten Auflagefläche (10) in der ersten Auflagefläche (8) beeinträchtigt.

2. Vorrichtung gemäss Anspruch 1, **dadurch gekennzeichnet, dass**:
- die erste Auflagefläche (8) und die zweite Auflagefläche (10) jeweils eine im Wesentliche drehzylindrische Form aufweisen, deren Durchmesser angepasst sind, um ihr Ineinandergreifen durch die relative Verschiebung entlang der dritten Achse (A3) zu erlauben, und
- die dritte Achse (A3) von der ersten Achse (A2) um einen Abstand mit einem vorbestimmten Wert entfernt ist, um die relative Drehung der genannten ersten Auflagefläche (8) und der zweiten Auflagefläche (10) um die dritten Achse (A3) zu beeinträchtigen.

3. Vorrichtung gemäss Anspruch 1, **dadurch gekennzeichnet, dass**:
- die erste Auflagefläche (8) und die zweite Auflagefläche (10) jeweils eine zylindrische Form aufweisen, welche nahe der drehzylindrischen Form aber keine drehzylindrische Form ist, und diese beiden Auflageflächen die Dimensionen haben, welche angepasst sind, um ihr Ineinandergreifen durch die relative Verschiebung entlang der dritten Achse (A3) zu erlauben,
- die zylindrische Form eine Asymmetrie aufweist, welche zumindest genügend ist, um die relative Drehung der genannten ersten Auflagefläche (8) und der zweiten Auflagefläche (10) um die dritte Achse (A3) zu beeinträchtigen.

4. Vorrichtung gemäss einem der Ansprüche 1 bis 3, **dadurch gekennzeichnet, dass** die Wandung (720), welche die zur Aufnahme des ersten Elements (711) des ersten Bauteils (71) vorgesehene Kammer (722) definiert, durch eine Wandung (720) der Struktur (3) einer Maschine (1) gebildet ist, welche vorgesehen ist, mit dieser Extraktionsvorrichtung (7) ausgestattet zu werden.

5. Maschine (1) zur Verdrängung eines gasförmigen Fluids (2), umfassend eine Vorrichtung gemäss einem der Ansprüche 1 bis 4.
